Europäisches Patentamt

European Patent Office

Office européen des brevets

(11) Publication number: **0 238 297**
**A2**

## (12) EUROPEAN PATENT APPLICATION

(21) Application number: **87302257.8**

(22) Date of filing: **17.03.87**

(51) Int. Cl.⁴: **G 01 L 21/00**
**G 01 L 21/30**

(30) Priority: **20.03.86 JP 62393/86**

(43) Date of publication of application:
**23.09.87 Bulletin 87/39**

(84) Designated Contracting States: **DE FR GB**

(71) Applicant: **SEIKO INSTRUMENTS INC.**
**31-1, Kameido 6-chome Koto-ku**
**Tokyo (JP)**

(72) Inventor: **Hojo, Hisao**
**1-30, Nishikubo, 3-chome,**
**Musashino-shi, Tokyo (JP)**

(74) Representative: **Miller, Joseph et al**
**J. MILLER & CO. Lincoln House 296-302 High Holborn**
**London WC1V 7JH (GB)**

(54) **Gas pressure gauge.**

(57) A gas pressure gauge for measuring the degree of vacuum in a vessel, comprising a gauge support member (3) which is adapted to close and seal an opening in the vessel, and an ionization type pressure gauge (1) which is secured to said gauge support member (3) characterised in that a further pressure gauge (2) which uses a mechanical vibrator (10) adapted to be driven by an electrical or magnetic field is also secured to the gauge support member (3), a control circuit (6) being provided for controlling the operation of the gauges (1,2) so that, when the degree of vacuum in the vessel is below a predetermined value, the further pressure gauge (2) operates and, when the degree of vacuum in the vessel is above the predetermined value, the ionization type pressure gauge (1) operates.

FIG. 1

**Description**

"GAS PRESSURE GAUGE"

The present invention relates to a gas pressure gauge for measuring the degree of vacuum in a vessel such, for example, as a vacuum chamber.

A number of different gas pressure gauges have previously been suggested for measuring gas pressure in a vacuum chamber which constitutes a component of a semi-conductor element manufacturing apparatus, or the like. Such gauges have included a diaphragm pressure gauge in which a pressure difference is applied to a diaphragm of an elastic material; a Pirani gauge utilizing thermal conduction; and an ionization-type pressure gauge in which a gas is ionized by electrons and an ion current generated thereby is measured, the measurement being proportional to the molecular density of the gas.

It would be desirable to have a single gas pressure gauge by means of which one could measure a wide range of pressures extending from a pressure of $10^{-1} \sim 10^{-6}$ Torr (namely the maximum degree of vacuum which can be achieved by a pump) to an operating pressure ($10^3 \sim 10^{-1}$ Torr), such a single gas pressure gauge being desirable for use, for example, in a semiconductor element manufacturing apparatus which utilizes vacuum.

However, neither the diaphragm pressure gauge nor the Pirani vacuum gauge can be used by itself for this purpose, since the pressure region which is capable of being measured by such a gauge only extends from atmospheric pressure to $10^{-3}$ Torr. The conventional ionization type vacuum gauge cannot be employed by itself for this purpose either, since the pressure region which is capable of being measured by such a gauge only extends from $10^{-3} \sim 10^{-10}$ Torr.

In order to measure the whole of both these pressure regions (from the atmospheric pressure to $10^{-10}$ Torr), therefore, it would normally be necessary to mount at least two different kinds of gas pressure gauges for measuring different pressure regions on separate flanges and to fit these flanges to a pressure chamber, which would be troublesome and inconvenient. It is impossible in practice, on the other hand, to incorporate the diaphragm pressure gauge or the Pirani vacuum gauge and the ionization-type vacuum gauge integrally into one flange to form a single gas pressure gauge, since the pressure-receiving element employed is too large.

According, therefore, to the present invention, there is provided a gas pressure gauge for measuring the degree of vacuum in a vessel, comprising a gauge support member which is adapted to close and seal an opening in the vessel, and an ionization type pressure gauge which is secured to said gauge support member, characterised in that a further pressure gauge which uses a mechanical vibrator adapted to be driven by an electrical or magnetic field is also secured to the gauge support member, a control circuit being provided for controlling the operation of the gauges so that, when the degree of vacuum in the vessel is below a predetermined value, the further pressure gauge operates and, when the degree of vacuum in the vessel is above the predetermined value, the ionization type pressure gauge operates.

Preferably, the mechanical vibrator is a quartz vibrator.

The ionization type pressure gauge may be a Bayard-Alpert gauge.

The gauge support member is preferably a flange provided with means enabling it to be secured to a vacuum chamber, sealing means being provided for sealing the flange to the vacuum chamber.

The predetermined value is preferably in the region of $10^{-4}$ Torr.

A shield is preferably provided which substantially shields the further pressure gauge from charged particles and from thermal radiation emanating from the ionization-type pressure gauge.

The pressure gauge which uses the mechanical vibrator may have an electrical characteristic which varies under the pressure of gas from 10 atms to $10^{-4}$ Torr, may be subminiature, and may have no effect on the ionization-type pressure gauge even when it is mounted adjacent to the latter. Moreover, the structural material of the mechanical vibrator may be stable and thus able to withstand its use even in a high vacuum region. Thus the incorporation of the mechanical vibrator and the ionization-type pressure gauge on the same gauge support member by making use of the above-mentioned distinctive features of the former makes it possible, without impairing the merits of the conventional ionization-type pressure gauge, to obtain a gas pressure gauge which enables the consecutive measurement of pressure in a region ranging from atmospheric pressure to $10^{-10}$ Torr.

The invention is illustrated, merely by way of example, in the accompanying drawings, in which:-

Figure 1 is a sectional view showing the overall construction of a gas pressure gauge according to the present invention,

Figure 2 is a block diagram of a control circuit which forms part of the gas pressure gauge of Figure 1;

Figure 3(a) is a graph showing the ion current - pressure characteristic of a Bayard-Alpert (B-A) gauge;

Figure 3(b) is a graph showing the resonant impedance-pressure characteristic of a quartz vibrator; and

Figure 4 is a graph showing the exhaust time-pressure display characteristic of the gas pressure gauge of Figure 1.

A preferred embodiment of a gas pressure gauge according to the present invention will now be described in detail hereunder with reference to the accompanying drawings.

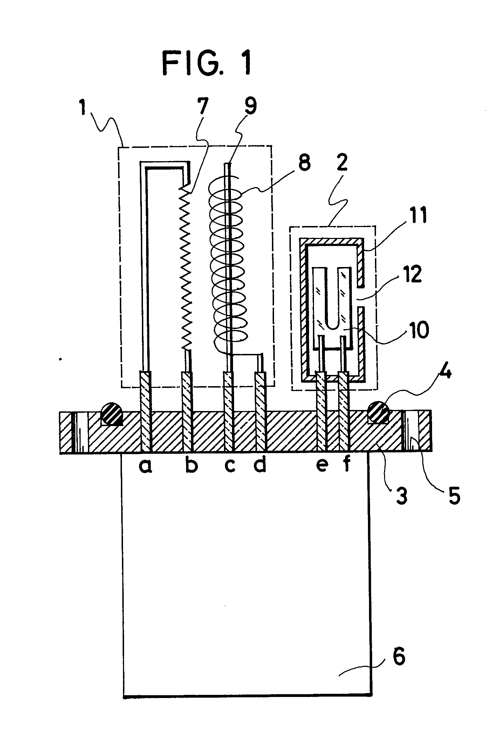

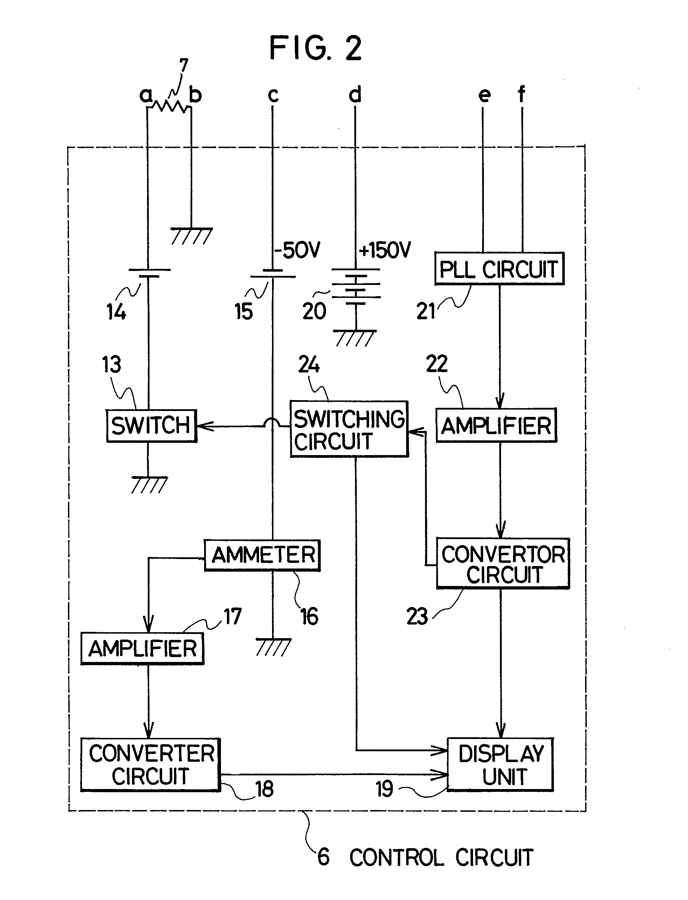

Figure 1 shows the overall structure of a gas pressure gauge according to the present invention. The reference numeral 1 denotes a pressure gauge of an ionization type, which can measure a pressure in a region of $10^{-4} \sim 10^{-10}$ ($10^{-7}$) Torr. The reference numeral 2 denotes a pressure gauge using a mechanical vibrator 10 which can measure a pressure in a region from atmospheric pressure to $10^{-4}$ Torr. The ionization-type pressure gauge 1 and the mechanical vibrator type pressure gauge 2 are mounted together on a common flange 3. The flange 3 is adapted to close and seal an opening of a vacuum chamber (not shown) with an O-ring seal 4 interposed between them, and is adapted to be fixed tightly to the vacuum chamber by bolts (not shown) which pass through screw holes 5. When the chamber needs to be heated to attain an ultra-high vacuum (about $10^{-10}$ Torr), a gasket formed of a copper plate or the like may be used in place of the O-ring seal 4. A control circuit 6, comprising constant-voltage power sources 14, 15, 20 (Figure 2), is provided for driving the gauges 1, 2, an oscillation circuit (not shown), a measuring circuit (not shown), an arithmetic circuit (not shown), a display unit 19 (Figure 2), etc.

A detailed description will now be provided concerning the ionization-type pressure gauge 1. A Bayard-Alpert gauge (B-A gauge) is employed in the present embodiment. The ionization-type pressure gauge which can be used in the present invention is not, however, limited to this particular gauge, which could alternatively be a cold-cathode type ionization vacuum gauge utilizing a Penning discharge, or a triode-type ionization vacuum gauge using a hollow-cylindrical collector.

A pressure in a region of $10^{-4}$ Torr or below may be measured by the gauge 1. In this gauge, as shown in Figure 1, thermions emitted from a filament 7 made of tungsten or the like gather first at a grid 8 subjected to a positive potential. Then, inside the grid 8 constituted by a coil, as a result of repeated reciprocating motion, the thermions collide with gas molecules inside the chamber, thus ionizing the gas molecules into ions. The ions thus generated are collected by a collector 9 positioned on the central axis of the grid 8 and impressed with a negative potential, and are turned thereby into an ion current.

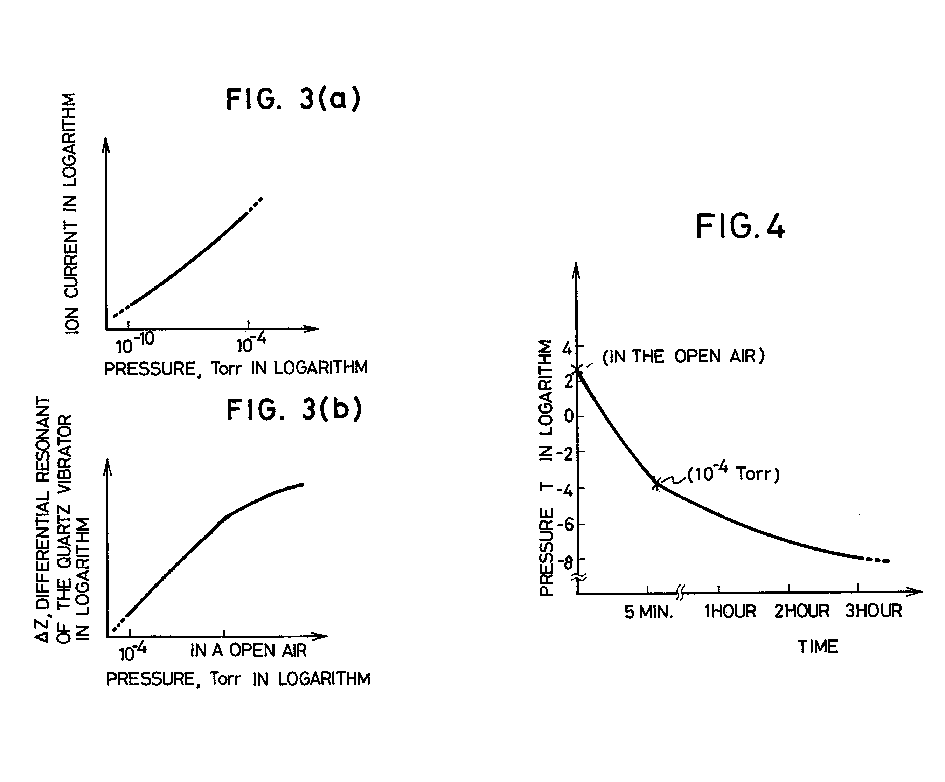

Figure 3(a) shows the ion current-pressure characteristic of the gauge 1. The ordinate shows the ion current logarithmically and the abscissa shows gas pressure logarithmically. As is apparent from Figure 3(a), the ion current is proportional to the density of the gas molecules, and accordingly it can be utilized for the measurement of the gas pressure. A pressure larger than $10^{-4}$ Torr cannot, however, be measured by the gauge 1 since this would cause the filament 7 to be burnt out. In addition, a pressure smaller than $10^{-10}$ Torr cannot be measured because in that case soft X-rays would be generated as noise on the collision of the thermions with the grid 8.

Referring again to Figure 1, a detailed description will now be provided concerning the pressure gauge 2 using the mechanical vibrator 10.

In the present embodiment, a fork-type quartz vibrator 10 is employed as the mechanical vibrator. Pressure in a region ranging from atmospheric pressure to $10^{-4}$ Torr can be measured by this fork-type quartz vibrator. Instead of a quartz vibrator, however, another piezo-electric element can be used, e.g. of barium titanate or the like, or a vibrator driven by a magnetic field may be employed as the mechanical vibrator. Also a quartz vibrator of another type may be employed other than the fork-type one.

A shield plate 11 substantially encloses the quartz vibrator 10, and blocks charged particles emitted from the B-A gauge 1 and the thermal radiation therefrom, while preventing evaporated or sputtered material from sticking on the quartz vibrator 10. An opening 12 provided in the shield plate 11 enables the quartz vibrator 10 to be subjected to the gas pressure inside the chamber (not shown).

When the fork-type quartz vibrator 10 is impressed with a certain alternating voltage and made to vibrate in a resonance frequency, the resistance component of an alternating impedance is varied by the gas pressure. Figure 3(b) shows this variation. The ordinate shows the differential resonance $\Delta Z$ and thus the resonant impedance of the quartz vibrator logarithmically and the abscissa shows the gas pressure logarithmically. As will be seen from the Figure 3(b), the value of the pressure in a region from $10^{-4}$ Torr to atmospheric pressure can be obtained from the value of the resonant impedance (or from a resonant current or a resonant voltage proportional thereto). The pressure below $10^{-4}$ Torr, however, cannot be measured because the variation in the resonant impedance is so small that accurate measurement cannot be effected.

The control circuit 6 will now be described in detail with reference to Figure 2. Terminals $\underline{a}$ and $\underline{b}$ are connected to the filament 7 of the B-A gauge 1, a terminal $\underline{c}$ is connected to the collector 9, and a terminal $\underline{d}$ is connected to the grid 8. Terminals $\underline{e}$ and $\underline{f}$ are respectively connected to a set of electrode terminals (not shown) of the fork-type quartz vibrator 2. The constant-voltage power source 14 may be connected to drive the terminals $\underline{a}$, $\underline{b}$ through the intermediary of a switch 13, whereby the filament 7 can be heated to emit thermions. The switch 13 turns ON when a predetermined degree of vacuum (e.g. $10^{-4}$ Torr) is reached inside the chamber, as further described below, and a current is thereby made to flow through the filament 7 to operate the B-A gauge 1. The switch 13 also operates to prevent the filament 7 from being burnt out.

The terminal $\underline{c}$ is connected to the constant-voltage power source 15, whereby a collector potential is maintained at -50V, for instance, so that ions can be collected. An ion ammeter 16 is connected between the constant-voltage power source 15 and the ground so as to measure the value of the ion current. After being amplified by an amplifier 17, the said value is converted by a converter circuit 18 into the value of the pressure in accordance with the ion current - pressure characteristic curve shown in Figure 3(a), and the result of conversion is displayed on the display unit 19. The terminal $\underline{d}$ is connected to the constant-voltage power source 20, whereby the grid 8 is maintained at a positive voltage (e.g. $+150$V). The thermions emitted from the filament 7 are gathered and made to vibrate and collide with gas molecules so as to generate ions.

The terminals e and f are connected to a phase-locked loop circuit (PLL circuit) 21. The PLL circuit 21 is a driving circuit for making the quartz vibrator 10 vibrate in a stable manner at its own natural resonance frequency. A resonant voltage signal in response to the resonant impedance is delivered from the PLL circuit 21 to an amplifier 22. The signal amplified thereby is inputted to a converter circuit 23. The converter circuit 23 converts a resonant voltage value (corresponding to a resonant impedance value) into a pressure value according to the resonant impedance -pressure characteristic curve shown in Figure 3(b), and the result of the conversion is displayed on the display unit 19.

A switching circuit 24 is connected to the converter circuit 23. When the value of the pressure measured by the quartz vibrator 10 is detected to be below a predetermined value (e.g. $10^{-4}$ Torr), the switching circuit 24 delivers a control signal to the switch 13 and to the display unit 19. By means of this control signal, the switch 13 is turned ON so as to make the B-A gauge 1 operate. Simultaneously, the content of the display on the display unit 19 is switched over from data derived from the quartz vibrator 10 to data derived from the B-A gauge 1.

Figure 4 shows an example of the characteristic of the exhaust time - pressure variation of the chamber, which is obtained by measuring this variation in practice by using the gas pressure gauge of the present invention. The ordinate shows the pressure logarithmically and the abscissa shows exhaust time logarithmically. About five minutes after a vacuum pump (not shown) has started to operate under atmospheric pressure, the pressure first drops to $10^{-4}$ Torr. At this time, the pressure is measured by the quartz vibrator 10. When the pressure then falls below $10^{-4}$ Torr, the measurement of pressure is automatically carried out by the B-A gauge 1. Consequently, the pressure inside the chamber continues to be measured automatically without a break.

The present invention enables a gas pressure gauge to be provided wherein a mechanical pressure gauge of small dimensions and capable of measuring a low-vacuum region and an ionization-type pressure gauge of small dimensions and capable of measuring a high-vacuum region are incorporated in a common flange and made to operate automatically each in its proper way according to the pressure being measured.

The gas pressure gauge of the present invention can be made small and unitary so that it can effect thorough measurement of pressure ranging from atmospheric pressure to an ultra-high vacuum.

Unexpected accidents, such as burning of the filament 7, can be prevented since automatic switching is conducted in accordance with pressure.

## Claims

1. A gas pressure gauge for measuring the degree of vacuum in a vessel, comprising a gauge support member (3) which is adapted to close and seal an opening in the vessel, and an ionization type pressure gauge (1) which is secured to said gauge support member (3) characterised in that a further pressure gauge (2) which uses a mechanical vibrator (10) adapted to be driven by an electrical or magnetic field is also secured to the gauge support member (3), a control circuit (6) being provided for controlling the operation of the gauges (1,2) so that, when the degree of vacuum in the vessel is below a predetermined value, the further pressure gauge (2) operates and, when the degree of vacuum in the vessel is above the predetermined value, the ionization type pressure gauge (1) operates.

2. A gas pressure gauge as claimed in claim 1 characterised in that the mechanical vibrator is a quartz vibrator (10).

3. A gas pressure gauge as claimed in claim 1 or 2 characterised in that the ionization type pressure gauge is a Bayard-Alpert gauge.

4. A gas pressure gauge as claimed in any preceding claim in which the gauge support member is a flange (3) provided with means (5) enabling it to be secured to a vacuum chamber, sealing means (4) being provided for sealing the flange (3) to the vacuum chamber.

5. A gas pressure gauge as claimed in any preceding claim characterised in that the predetermined value is in the region of $10^{-4}$ Torr.

6. A gas pressure gauge as claimed in any preceding claim in which a shield (11) is provided which substantially shields the further pressure gauge (2) from charged particles and from thermal radiation emanating from the ionization-type pressure gauge (1).

7. A gas pressure gauge wherein a pressure gauge (2) using a mechanical vibrator (10) driven by an electric field or a magnetic field and an ionization-type pressure gauge (1) are incorporated in a common flange (3) and which is provided with a control circuit (6) for making the pressure gauge (2) using the mechanical vibrator (10) operate in a low-vacuum region and the ionization-type pressure gauge (1) in a high-vacuum region.

FIG. 1

# FIG. 2

6 CONTROL CIRCUIT

FIG. 4

(IN THE OPEN AIR)

(10⁻⁴ Torr)

PRESSURE T IN LOGARITHM

4
2
0
-2
-4
-6
-8

5 MIN.   1HOUR 2HOUR 3HOUR

TIME

FIG. 3(a)

PRESSURE, Torr IN LOGARITHM

10⁻⁴

10⁻¹⁰

ION CURRENT IN LOGARITHM

FIG. 3(b)

IN A OPEN AIR

PRESSURE, Torr IN LOGARITHM

10⁻⁴

ΔZ, DIFFERENTIAL RESONANT OF THE QUARTZ VIBRATOR IN LOGARITHM